(19) Europäisches Patentamt
European Patent Office
Office européen des brevets

(11) **EP 1 584 918 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(51) Int Cl.:
*G01N 21/64* *(2006.01)*     *G02B 21/00* *(2006.01)*

(21) Anmeldenummer: 05102760.5

(22) Anmeldetag: **07.04.2005**

(54) **Verfahren und Vorrichtung zur Fluoreszenz-Lebensdauer-Imaging-Nanoskopie**

Method and device for fluorescence lifetime imaging nanoscopy

Méthode et dispositif pour mesure de durée de vie de fluorescence en imagerie nanoscopique

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **07.04.2004 DE 102004017710**
**09.08.2004 DE 102004039035**

(43) Veröffentlichungstag der Anmeldung:
**12.10.2005 Patentblatt 2005/41**

(73) Patentinhaber:
• **Europhoton GmbH, Gesellschaft für optische Sensorik**
**12247 Berlin (DE)**
• **Leibniz-Institut für Neurobiologie**
**39118 Magdeburg (DE)**

(72) Erfinder:
• **Kemnitz, Klaus**
**12247, Berlin (DE)**
• **Zuschratter, Werner**
**39114, Magdeburg (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
EP-B- 0 946 855      DE-A1- 10 040 988

DE-A1- 10 144 435     DE-A1- 10 154 699
DE-A1- 19 653 413     DE-C1- 19 851 240
US-A- 5 866 911       US-A- 5 926 283
US-A- 5 982 497

• EMILIANI V ET AL: "Low-intensity two-dimensional imaging of fluorescence lifetimes in living cells" APPLIED PHYSICS LETTERS, Bd. 83, Nr. 12, 22. September 2003 (2003-09-22), Seiten 2471-2473, XP012035189 ISSN: 0003-6951
• KLAR T A ET AL: "Fluorescence microscopy with diffraction resolution barrier broken by stimulated emission" PROC. OF THE NATIONAL ACADEMY OF SCIENCES (PNAS), Bd. 97, Nr. 15, 18. Juli 2000 (2000-07-18), Seiten 8206-8210, XP002384085
• SCHMIDT MICHAEL ET AL: "Subresolution axial distance measurements in far-field fluorescence microscopy with precision of 1 nanometer" REVIEW OF SCIENTIFIC INSTRUMENTS, Bd. 71, Nr. 7, Juli 2000 (2000-07), Seiten 2742-2745, XP012038395 ISSN: 0034-6748
• DYBA M ET AL: "FOCAL SPOTS OF SIZE LAMBDA/23 OPEN UP FAR-FIELD FLUORESCENCE MICROSCOPE AT 33 NM AXIAL RESOLUTION" PHYSICAL REVIEW LETTERS, Bd. 88, Nr. 16, 22. April 2002 (2002-04-22), Seiten 163901-1, XP001097237 ISSN: 0031-9007
• AGRONSKAIA A V ET AL: "High frame rate fluorescence lifetime imaging" JOURNAL OF PHYSICS D (APPLIED PHYSICS), Bd. 36, Nr. 14, 21. Juli 2003 (2003-07-21), Seiten 1655-1662, XP002384086 ISSN: 0022-3727

**Beschreibung**

Die Erfindung betrifft ein Verfahren und eine Vorrichtung zur Fluoreszenz-Lebensdauer-Imaging-Nanoskopie.

Zur Erforschung der Struktur und funktionellen Organisation des Lebendigen besteht in der molekularen Zell- und Entwicklungsbiologie ein enormer Bedarf nach höchstauflösenden Fluoreszenzmikroskopen, bzw. -nanoskopen, um die Dynamik lebender Zellpopulationen zu untersuchen.

Bisherige Technologien können heute die suprazelluläre und zelluläre Dimension zwar bis hin zur beugungsbegrenzten Auflösung von einigen hundert Nanometern sichtbar machen. Für das Verständnis der vielfältigen dynamische Prozesse und schnellen Wechselwirkungen zwischen Zellorganellen oder Proteinkomplexen ist aber der Bereich der komplexen biologischen Makromoleküle und Zellorganellen mit typischen Abmessungen von etwa zehn bis einigen hundert Nanometer von größter Bedeutung. Die Entwicklung einer neuen Klasse von Höchstleistungsfluoreszenzmikroskopen ermöglicht heute eine schnelle, d.h. in Echtzeit, und dreidimensional hohe, beugungsunbegrenzte Auflösung. Es ist unumgänglich, neue Methoden zu entwickeln, die eine Visualisierung von Protein-Protein-Interaktionen in lebenden Zellen ermöglichen, insbesondere über einen längeren Zeitraum hinweg. Nur so kann die Dynamik signalübertragender Prozesse durch Protein-Protein-Wechselwirkungen genau analysiert werden. Folglich hat die Entwicklung von minimalinvasiven Beobachtungssystemen, die Informationen über Protein-Protein- oder Protein-Zellorganellen-Interaktionen auf Einzelmolekülbasis liefern ohne den intrazellulären Stoffwechsel zu zerstören höchste Priorität in der moderne Zellbiologie.

Zur Erforschung kleiner Strukturen gibt es auf der einen Seite das Gebiet der Nanoskopie. Es sind folgende neuartige, hochauflösende, lichtoptische Verfahren zur Nanoskopie bekannt: SMI und SPDM (EP 0 946 855 B1, DE 297 01 663 U1, US 6,424,421 B1, EP 0 946 855 B1, DE 198 30 596 A1, WO 03/031951 A1) oder 4Pi (Nagorni, M. and S. W. Hell (1998). "4Pi-confocal microscopy provides three-dimensional images of the microtubule network with 100- to 150-nm resolution." J. Struct. Biol. 123: 236-247;) und STED (Klar, T. A., S. Jakobs, M. Dyba, A. Egner and S. W. Hell (2000). "Fluorescence microscopy with diffraction resolution limit broken by stimulated emission." Proc. Natl. Acad. Sci. USA 97(15): 8206-8210). Zwei Grundfaktoren begrenzen die optische Auflösung von Lichtmikroskopen: Die Wellenlänge des verwendeten Lichtes und die Apertur des Mikroskopobjektivs. Bei konventionellen Ölimmersionen liegt die optische Auflösung bei ungefähr 200 nm lateral und 600 bis 700 nm axial. Diese optische Auflösung ist völlig unzureichend für die Lösung vieler Fragen der Biophotonik in den Bereichen der Molekularen Zellbiologie und Neurobiologie. Jüngste Entwicklungen auf dem Gebiet der Mikroskopie, wie z.B. der Einführung der Multifokalen-Multiphotonen-Mikroskopie, der 4pi-Mikroskopie, der stimulierten Emissionsabregungsmikroskopie (STED), der spektrale Modulationsmikroskopie bzw. Wellenfeldmikroskopie und der spektralen Präzisionsdistanz Mikroskopie in Kombination mit Point-spread-function-Engineering haben gezeigt, dass die Auflösungsgrenze der bisherigen Weitfeldfluoreszenz-Mikroskopie überwunden werden kann und in den Nanobereich verschoben werden kann. Bislang basierten die meisten Untersuchungen zur Analyse der Dynamik in lebenden Zellen auf time-lapse, Videomikroskopie oder konfokales Laserscanning in Kombination mit Vitalfarbstoffen, d.h. fluoreszierenden Markern wie z.B. GFP, und wurden ergänzt durch intensitäts-basierte Fluoreszenz-Resonanz-Energieübertragung (FRET) oder FCS Analysen. Die Fähigkeit dieser Mikroskope einzelne fluoreszenz-markierte Proteine bzw. Proteinkomplexe zu beobachten und hinsichtlich ihrer Fluoreszenzlebensdauer zu charakterisieren hat bereits neue Möglichkeiten für empfindliche biophysikalische Messungen eröffnet.

Mit den Methoden des SMI-Nanosizing, SPDM (Spektrale Präzision Distanz Mikroskopie) bzw. 4Pi Methoden können über dieses Auflösungsvermögen hinausgehende Informationen wie Objektgrößen, Objektpositionen bzw. wechselseitige Distanzen (Topologie) sehr genau bestimmt werden. Mit SMI-Mikroskopie unter Verwendung von Ein-Photonen-Anregung bzw. 4Pi / STED-Mikroskopie unter Zwei-Photonen-Anregung können gegenwärtig bei individuellen kleinen fluoreszierenden Objekten folgende Größen bestimmt werden: Standardabweichung Durchmesser bis hinunter zu ca. 25 nm; Positionen mit einem Fehler (Standardabweichung) von 1.0 nm; axiale Distanzen bis zu ca. 5 nm. Mit SPDM können derzeit 3D-Distanzen zwischen individuellen Objekten verschiedener spektraler Signatur bis ca. 50 nm bestimmt werden.

Die 4Pi-, STED- und SPDM-Methoden scannen dabei jeden Punkt der Probe mit Hilfe eines Einzelfokus ab (Einzelpunkt-Scanning). Dazu wird ein Punktdetektor von hoher Quanteneffizienz verwendet. Die SMI Methode arbeitet nicht-scannend mit einem zeitauflösenden Imaging Detektor.

Um funktionelle Veränderungen in lebenden Zellen zu verstehen, müssen genaue Untersuchungen der molekularen Interaktionen innerhalb ihrer natürlichen Umgebung durchgeführt werden. Zur Vermeidung von Fehlinterpretationen bei der Beobachtung markierter Proteinwechselwirkungen ist darüber hinaus eine sogenannte FRET-Verifikation essentiell. Eine Möglichkeit molekulare Abstände potentieller Interaktionspartner zu bestimmen, besteht in der Detektion und Analyse des strahlungslosen Energietransfers zwischen einem fluoreszierenden Donor-Akzeptor-Paar. Diese Fluoreszenz-Resonanz-Energieübertragung (FRET) ist eine abstandsabhängige Interaktion zwischen den elektronisch angeregten Zuständen von zwei fluoreszierenden Molekülen, die nur dann stattfinden kann, wenn Donor- und Akzeptor-Moleküle in unmittelbarer Nachbarschaft liegen, das Absorptionsspektrum des Akzeptors sich mit dem Fluoreszenz-Emissionsspektrum des Donors deckt und die Donor- und Akzeptor-Übergangs-Dipol-Orientierungen ungefähr parallel liegen. Wenn der Abstand zwischen zwei Molekülen innerhalb des so genannten Förster Radius liegt, typischerweise 50 Å (1-10 nm), wird Energie von einem angeregten Donor-Molekül auf ein Akzeptor-Molekül ohne Emission eines Photons übertragen. Infolgedessen verursacht das Donor-Molekül eine Fluoreszenzemission im längerwelligen Spektrum des Akzeptor-Moleküls, während die Quantenausbeute der Donorfluoreszenz-Emission gleichzeitig vermindert wird. Die Effizienz der Energieübertragung weist eine starkreziproke Abhängigkeit (6. Potenz) zum Abstand zwischen dem Donor und dem Akzeptor auf; deshalb kann mit dieser Technik sehr genau die unmittelbare Nachbarschaft von zwei Fluorochromen nachgewiesen werden. Der Nachweis kann sowohl spektroskopisch als auch mit lichtmikroskopischen Techniken erfolgen. Da die Fluoreszenzresonanz-Energieübertragung bei Abständen stattfindet, die in der Größenordnung von Proteinen liegt, kann diese Technik genutzt werden, um Protein-Protein-Interaktionen lichtmikroskopisch zu detektieren. Ob Proteine, die innerhalb des Auflösungsvermögens der Fluoreszenzmikroskopie kolokalisiert erscheinen, tatsächlich miteinander interagieren oder nicht, lässt sich somit in lebenden Zellen lichtmikroskopisch untersuchen, wenn als Fluorochrome spektrale Mutanten von GFP eingesetzt werden. Mit geeigneten Detektionstechniken, wie z. B. zeitkorrelierte Einzelphotonen-Analyse, lassen sich die Dynamiken von Protein-Protein-Interaktionen sogar zeitaufgelöst studieren.

Die strahlungslose Fluoreszenzresonanz-Energieübertragung kann durch intensitätsbasierte oder zeitaufgelöste Methoden beobachtet werden. Die Verfahren, die auf der Bestimmung der Veränderung der Fluoreszenzintensität von Donor- und Akzeptormolekülen beruhen, detektieren entweder das Abklingen der Donorfluorophore oder die sensibilisierte Emission der Akzeptor-moleküle. Andere intensitätsbasierte Techniken, um FRET in Zellen zu detektieren, beruhen auf der Bestimmung der Zunahme der Donorfluoreszenz nach irreversiblem Ausbleichen der Akzeptorfluoreszenz.

FRET-Verfahren, die auf einer Intensitätsanalyse der Fluorophore basieren, weisen jedoch folgende Nachteile auf: Sie sind limitiert durch das spektrale Übersprechen der Farbstoffe und sie hängen von der Konzentration der vorhandenen Fluorophore ab, einem Parameter, welcher in lebenden Zellen sehr schwierig zu bestimmen und zu kontrollieren ist. Das irreversible Ausbleichen eines der FRET-Partner beschränkt zusätzlich den Einsatz auf fixierte Proben oder Einzel-Zeit-Punkt-Messungen in lebenden Zellen und ist nicht für Langzeitbeobachtung des FRET geeignet, um beispielsweise Interaktions-Oszillationen nachzuweisen.

Neben der verbesserten räumlichen Auflösung wurden in den letzten Jahren zeitaufgelöste Meßmethoden zunehmend populärer, da hiermit die von Zellbiologen und Medizinern langersehnten Möglichkeiten der vitalitätserhaltenden und autofluoreszenz-korrigierten Beobachtung (FRET-Verifikation) lebender Zellen ermöglicht wird. Die "Fluorescence Lifetime Imaging Mikroskopie" (FLIM), mit ihrer Fähigkeit zur Akquisition von Fluoreszenzdynamiken, die von der Mikroumgebung abhängen und über deren Eigenschaften informieren, hat Zugang zu völlig neuen Informationsebenen ermöglicht. Zeitkorrelierte Verfahren, wie die Fluoreszenz-Lebensdauer-Mikroskopie (Fluorescence Lifetime Imaging Microscopy, FLIM) sind unabhängig von Änderungen in der Fluorophor-Konzentration oder Anregungsintensität, so dass die Kombination von FRET und FLIM eine hohe räumliche (Nanometer) und zeitliche (Pico- bis Nanosekunden) Auflösung gewährleistet. Die Lebensdauer des Donorfluorophors wird dabei in Anwesenheit und Abwesenheit des Akzeptor-Moleküls gemessen. Die Differenz der Fluoreszenzdynamiken liefert ein Korrelat der FRET-Aktivität.

Aus der DE 100 40 988 A1 ist ferner ein Verfahren und eine Vorrichtung zum Messen chemischer und biologischer Proben mit Hilfe der Lumineszenz-Spektroskopie bekannt. Von einer Strahlungseinheit wird elekromagnetische Strahlung unterschiedlicher Wellenlängenbereiche und/oder Polarisationen auf die Probe geleitet. In der Probe, die mindestens einen Farbstoffmarker aufweist, werden die Farbstoffmarker zur Abgabe von Lumineszenz angeregt und geben Licht ab. Das abgegebene Licht wird über eine Optikeinheit in Richtung einer Detektoreinheit geleitet. In der Detektoreinheit wird das von den Farbstoffmarkern abgegebene Licht in Detektoren detektiert.

Allerdings arbeiten alle bisherigen Fluoreszenzmikroskope mit hohen bis sehr hohen Anregungsintensitäten. So arbeiten in der Regel konfokale Mikroskope mit einem Einzelpunkt-Scanning der Probe, d.h. jeder Punkt wird einzeln abgescannt. Dabei kommen Durchschnittsleistungen im hohen kW/cm$^2$ Bereich zum Einsatz, bzw. bei der 2-Photonenanwendung Spitzenleistungen bis ca 100 GW/cm$^2$. Es ist bekannt, dass diese hohen Leistungen schädlichen Einfluß auf lebende Zellen haben (H. J. Koester, D. Baur, R. Uhl, and S. W. Hell (1999) Ca2+ Fluorescence Imaging with Pico- and Femtosecond Two-Photon Excitation: Signal and Photodamage Biophys J, October 1999, p. 2226-2236, Vol. 77, No. 4; K. König, H. Liang, MW. Berns, B. Tromberg: Cell damage by near-IR microbeams. Nature. 377(1995)20-21; K. König, T.W. Becker, I. Riemann, P. Fischer, K.J. Halbhuber (1999). Pulse-length dependence of cellular response to intense near-infrared laser pulses in multiphoton microscopes. Opt. Lett. 24(1999)113-115; U.K. Tirlapur, K. König, C. Peuckert, R. Krieg, K.J. Halbhuber. Femtosecond near-infrared laser pulses elicit generation of reactive oxygen species in mammalian cells leading to apoptosis-like death. Experimental Cell Research. 263(2001)88-97. DOI 10.1006/excr.2000.5082). Der Versuch so viele Photonen wie möglich während eines Anregungs-Relaxations-Zyklus zu detektieren und der Einsatz von Einzelpunkt-Scanning Systemen bei der Einzelmolekülbeobachtung, meist unter Einsatz von Femtosekunden (fs)-Lasern, führt zwangsläufig zu hohen Durchschnitts- und Spitzenenergien mit typischerweise > 1 kW/cm$^2$, welche zu irreversiblen Photobleichen der SM Farbstoffe und signifikanten photodynamischen Reaktionen in lebenden Zellen führen. Daher sind die oben genannten Visualisierungstechniken ungeeignet, um molekulare Interaktionen über einen längeren Zeitraum zu beobachten. Da sie photodynamische Reaktionen der molekularen Proben hervorrufen, die z.T. ein FRET-Signal vortäuschen können, und den lebenden Zustand (zer)stören, sind sie ungeeignet, minimal-invasive zellbiologische und neurobiologische Untersuchungen durchzuführen. Insbesondere die Phototoxizität ausbleichender Fluorochrome und die Änderungen der intrazellulären Viskosität durch hochenergetische Bestrahlung mit kurzwelligem Licht stellen hierbei die limitierenden Faktoren dar.

Andererseits sind z. B. minimal-invasive, Multi-Detektor/Multi-Parameter TSCSPC (Time- and Space-Correlated Single Photon Counting)-Detektionsverfahren (DE 10144435 A1, EP 1291627 A1; Emiliani et al, "Low-intensity two-dimensional imaging of fluorescence lifetimes in living cells", Applied Physics Letters, Bd. 83, Nr. 12, Seiten 2471-2473 ) bekannt. Jüngste Fortschritte in der MCP-PMT Technologie, welche durch einen drastischen Anstieg der Ortskanäle und der kontinuierlichen Bildaufnahme charakterisiert war, sowie die Einführung von Delay-Line(DL)-Anoden und 'kodierten' Multi-Anoden führten zur Etablierung der Zeit- und Orts-korrelierten Einzelphotonenzählung (TSCSPC) und deren Anwendung in der Fluoreszenzmikroskopie. Die ultra-sensitiven MCP-PMT Detektoren können gleichzeitig Fluoreszenz-Lebensdauermessungen in derzeit 200 (DL) bzw. 250 x 250 Ortskanälen mit einer Zeitauflösung von < 10 ps und einem dynamischen Bereich (Verhältnis zwischen hellstem und dunkelstem detektierbaren Signal) von 106 (DL) bzw. bis 107 bei der Quadrant-Anode (QA) aufgenommen werden, unter gleichzeitiger Verfolgung der Diffusion des emittierenden Partikels (Tracking). Qualitativ hochwertige Fluoreszenz-Dynamiken von bis zu vier exponentiellen Komponenten können innerhalb von subzellulären Kompartimenten über einen längeren Zeitraum, z.B. mehrere Stunden, aufgenommen werden. Die TSCSPC-Methode ermöglicht es, einzelne Partikel zu verfolgen und Änderungen der Fluoreszenzlebensdauer von zwei interagierenden, sich bewegenden Makromolekülen in Lösungen oder zwischen sich bewegenden Makromolekülen und zellulären Organellen in lebenden Zellen genau zu bestimmen. Ferner ist eine simultane Aufnahme mehrerer Farb- und/oder Polarisationskanäle möglich, indem man das emittierende Signal mittels Strahlteiler auf mehrere Detektoren bzw. Detektorsegmente aufteilt und die Signaturen der unterschiedlichen Farb- und/oder Polarisationskanäle analysiert (Multi-Detektor & Multi-Parameter System).

Es ist daher Aufgabe der vorliegenden Erfindung, ein Verfahren und ein Mittel zur Fluorescence Lifetime Imaging Untersuchung anzugeben, welches die Untersuchung unter minimal invasiven Bedingungen mit einer verbesserten Auflösung gegenüber der Fluorescence Lifetime Imaging Mikroskopie erlaubt.

Diese Aufgabe wird erfindungsgemäß gelöst durch die Merkmale im kennzeichnenden Teil der Ansprüche 1, 2 (Vorrichtungsansprüche), 10 und 11 (Verfahrensansprüche) im Zusammenwirken mit den Merkmalen im Oberbegriff. Zweckmäßige Ausgestaltungen der Erfindung sind in den Unteransprüchen enthalten. FLIN, Fluorescence Lifetime Imaging Nanoskopie, ist ein Biophotonikverfahren, das die bekannte Methode FLIM, Fluorescence Lifetime Imaging Mikroskopie, vom Mikro- in den Nanobereich transferiert und eine Messtechnik für die Bio-Nanotechnologie darstellt. Der Einsatz neuartiger TSCSPC-Detektoren in Kombination mit hochauflösenden Mikroskopie bzw. Nanoskopie-Verfahren, wie z.B. 4Pi, STED, SMI, SPDM, ermöglicht eine minimal-invasive Langzeitbeobachtung der supramolekularen Struktur, Funktion und Dynamik makromolekularer Interaktionsprozesse an Zell-Zell-Kontakten, im Zytoplasma und Zellkern von lebenden Zellen, wie z.B. Neuronen und immunkompetenten Zellen, ohne deren nativen Zustand zu stören. Durch Kombination mehrerer TSCSPC-Detektoren mittels geeigneter Strahlteiler lässt sich das Verfahren zu einem minimal-invasiven Multi-Parameter FLIN System ausbauen. Anwendung findet das neue Verfahren in der Immunologie, der Krebsforschung, bei Untersuchungen zur Nervenregeneration, der Diagnostik sowie bei der Entwicklung von Verbindungen zwischen biologischer und künstlicher Nanowelt, wie z.B. Neuroprothesen.

Durch die Verwendung neuester zeitauflösender Detektions-Techniken, welche sehr schnelle und extrem sensitive Detektoren einsetzen, können die oben beschriebenen Beschränkungen der intensitätsbasierenden Methoden überwunden werden. Die Empfindlichkeit der Detektoren gestattet eine sehr schwache Fluoreszenzbeleuchtung; wodurch es möglich ist, die Dynamik biologischer Prozesse in lebenden Zellen zu verfolgen, ohne nennenswerte Schädigungen wie Phototoxizität oder photodynamische Prozesse zu induzieren. Das heißt, die Visualisierung findet unter minimal invasiven Bedingungen statt. Die Vorteile des zeitaufgelösten FRET, im Gegensatz zu intensitätsbasierendem FRET, sind somit die Unabhängigkeit der Messung von der Farbstoffkonzentration, die erhöhte Empfindlichkeit bei gleichzeitig verminderten Hintergrundsignalen durch die Zeit-Korrelation, sowie die Möglichkeit, oszillierende Interaktionen nachweisen zu können. Eine kontinuierliche Verfolgung der Interaktion von Proteinen lässt sich somit nur mit Hilfe einer minimal invasiven Fluoreszenz-Lebensdauer-Mikroskopie/Spektroskopie realisieren.

Das hier beschriebene FLIN Verfahren zielt vorteilhafterweise auf die quantitative Struktur-Funktions-Analyse von supramolekularen Komplexen auf Einzelmolekülbasis in Lösungen und in vivo / in vitro und erhält im Gegensatz zu existierenden Verfahren, den nativen Zustand lebender Zellen über einen längeren Zeitraum.

Dies wird durch die Kombination eines neuartigen hochauflösenden, lichtoptischen Nanoskopieverfahrens mit einem revolutionären, minimal-invasiven, Multiparameter Detektionsverfahren mit einer Durchschnittsanregung von ca. 10 mW/cm$^2$, d.h. mit $10^3$-$10^4$ mal weniger Anregungsintensität als in der klassischen Fluoreszenz- bzw. Laserscanningmikroskopie, erzielt. Darin wird die zeit- und orts-auflösende Einzelphotonenzählung TSCSPC (Time- and Space-Correlated Single Photon Counting) der Multiparameter Pikosekunden-Imaging Spektroskopie mit der Spatially Modulated Illumination (SMI) bzw. der 4PI/STED-Mikroskopie/Nanoskopie zur "Multiparameter Fluoreszenz Lebendsdauer Imaging Nanoskopie" (MP-FLIN) kombiniert, im Zusammenhang mit einer Multi-Punkt-Scanning-Einrichtung (außer SMI)

Das daraus resultierende minimal-invasive MultiParameter FLIN-Verfahren ermöglicht dabei folgende neuartige Anwendungen: Pikosekunden FRET-Verifizierung, Pikosekunden Anisotropie-Imaging, minimal-invasives FCS-Imaging und Kolokalisations-Tracking als FRET-Alternative bei großen Proteinen. Vorteilhafterweise kann das Verfahren für Fragen zum Einsatz kommen, die im Fokus biochemischer, molekularbiologischer und zellbiologischer Untersuchungen stehen, insbesondere in Nervenzellen, immunkompetenten und transkriptionell aktiven Zellen, sowie zur zeitaufgelösten Detektion bei Screening-Verfahren, wie z.B. DNA Chips. Mit dem neuen Verfahren werden erstmals Größen- und Mikromobilitätsmessungen an optisch isolierten fluoreszenzmarkierten biologischen Nanostrukturen in einzelnen lebenden Zellen und Gewebeschnitten ermöglicht. Um die zu untersuchenden Strukturen auch aktiv zu manipulieren, kann das Verfahren mit Laserguiding bzw. Lasermikromanipulations-Techniken kombiniert werden (Uncaging, CALI, Pinzette; Schere) wodurch völlig neue Möglichkeiten der Mikromanipulation und "in vivo" Nanostruktur-Kontrolle eröffnet werden.

Ein besonderer Vorteil der Erfindung besteht darin, dass die Detektoren für das hier skizzierte Multi-Parameter FLIN Verfahren nur ca. 10 mW/cm$^2$ Anregung brauchen, $10^3$ - $10^4$ weniger als in Standard-Fluoreszenzmikroskopen. Zusätzlich und als FRET-Alternative kann die $\mu$s Rotationszeit großer Proteine/Komplexe bestimmt werden. Es ergibt sich eine Reihe von neuartigen Anwendungen, wie z.B., Pikosekunden Anisotropie-Imaging, FRET-Verifikation und Einzelmolekül-Tracking, mit z.B. einer Auflösung von 5 ms, bei einem Signal-Rauschverhältnis von 50 und einer Grenze der Langzeitbeobachtung von > 30 Minuten. FLIM ist auf 200-500 nm Ortsauflösung limitiert, im Gegensatz zu FLIN, das eine 10x höhere Ortsauflösung hat.

Ein besonderer Vorteil besteht darin, dass durch eine 10-fach verbesserte Ortsauflösung der neuartigen FLIN Methode gegenüber der Standard FLIM Anwendung die intrazelluläre Nanowelt direkt sichtbar und interpretierbar gemacht wird. Multiparameter-FLIN stellt daher eine Messtechnik für die Bio-Nanotechnologie dar. Durch die Kombination der SMI, 4Pi bzw. STED Nanoskopie mit der minimal-invasiven Multiparameter-Akquisition von Einzelphotonen basierend auf der TSCSPC Methode werden Fluoreszenslebendsdauer Messungen an identifizierten Ultrastrukturen lebender Zellen bzw. isolierter Makromoleküle möglich.

Die Erfindung wird nachstehend anhand einiger Ausführungsbeispiele näher erläutert.

Es zeigt:

Fig. 1: Eine beispielhafte Anordnung zur Fluoreszenz-Lebendsdauer-Imaging-Nanoskopie (FLIN) in schematischer Form;

Fig. 2: Eine erfindungsgemäße Anordnung zum Ko-Lokalisations-Tracking;

Fig. 3: Eine weiteres Ausführungsbeispiel zur Fluoreszenz-Lebendsdauer-Imaging-Nanoskopie (FLIN) in schematischer Form mit Multi-Fokus-Einrichtung;

Fig. 4: Eine erfindungsgemäße Anordnung zur Fluoreszenz-Lebendsdauer-Imaging-Nanoskopie (FLIN) in detaillierter Form.

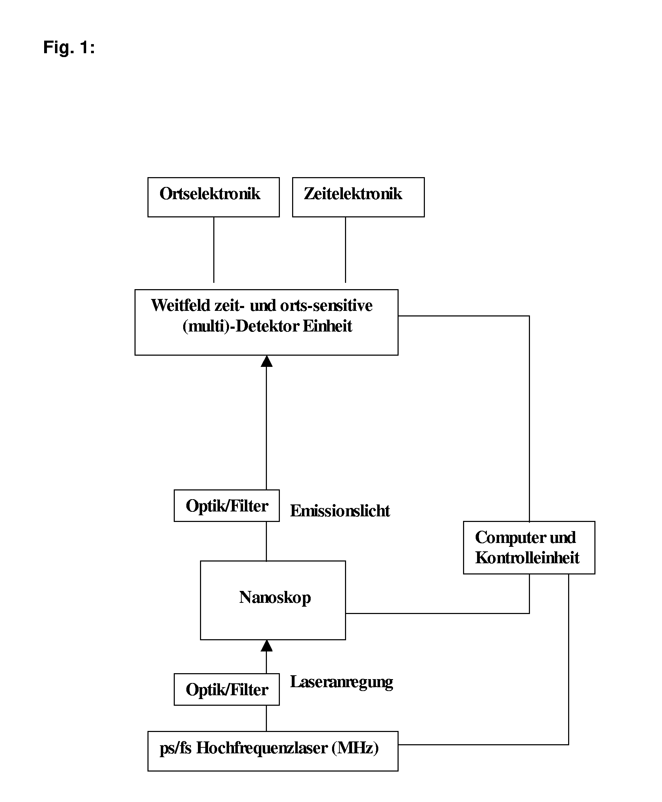

Fig. 1 zeigt eine beispielhafte FLIN Anordnung für Anwendung in der ZeitDomäne: ein oder mehrere hochfrequente (ca. 1-100 MHz) polarisierte Piko- oder Femtosekunden Laser werden mittels optischer Elemente, wie Linsen, Lichtleiter, Filter, Strahlteiler und/oder Spiegel, an eine Nanoskopie-Einheit gekoppelt. Die Nanoskopie-Einheit ist entsprechend einer der bekannten SMI, SPDM oder 4Pi Anordnungen, etc. konstruiert. Die Laser werden in der Nanoskopie-Einheit aufgespalten und durch zwei Objektive, von gegenüberliegenden Seiten, auf die Probe gelenkt und die emittierte Lumineszenz bzw. das Streulicht durch zumindest eins (SMI) oder beide Objektive gesammelt, vereint, gefiltert und auf einen oder mehrere zeit- und orts-sensitive Weitfeld-Imaging Detektoren der Detektor-Einheit mit Ortselektronik- und Zeitelektronik-Untereinheiten mittels optischer Elemente, wie z.B. Strahlteiler, Spektralfilter, Polarisationsfilter, Spiegel, Teilerspiegel, Linsen und/oder Filter, gelenkt. Laser, Nanoskop und Detektoreinheit sind über eine Computer und Kontrolleinheit synchronisiert. Die Multi-Detektoreinheit besteht im Wesentlichen aus einem oder mehreren Teilerspiegel, Filter und aus einem oder mehreren Detektoren, die in geeigneter Weise miteinander und dem Anregungslaser synchronisiert sind.

Die Detektoreinheit enthält TSCSPC Detektoren für minimal-invasive Anwendungen oder gated-CCD Detektoren für Hochfrequenz-Anwendung mit hohem Datendurchsatz bei reduzierter Zeitauflösung, reduziertem dynamischen Bereich und hoher Anregungsintensität, kann aber auch PMTs, MCP-PMTs, APD (avalanche photo diode) enthalten für scanning-TCSPC. Die TSCSPC und Scanning-TCSPC Methoden liefern, in Gegensatz zu CCD Kameras, Hochqualitäts-Dynamiken mit weit überlegenen dynamischen Bereich, sind aber limitiert durch Sättigungseffekte der verwendeten MCP (multi-channel plate) Verstärkerplatten. Die SPC (single photon counting) Methoden werden also bevorzugt bei niedrigen Anregungsintensitäten eingesetzt, wohingegen CCDs leicht hohe Anregungsintensitäten verkraften können, aber durch stark reduzierte Qualität der Fluoreszenzdynamik (sehr wenige Punkte auf der Zeitachse) sowie durch ca.

100-fachen schlechteren dynamischen Bereich ausgezeichnet sind. Als Detektoren kommen in Frage: Gated-CCD; TSCSPC Detektoren entweder mit leitenden Multi-Anoden oder resistiven Multi-Anoden, wobei im ersten Fall Ladungen und im zweiten Fall die Widerstände auf den bzw. in den Teilanoden gemessen werden, um die xy Positionen der Einzelphotonen zu bestimmen. Weitere Beispiele für Multi-Anoden sind unter anderem Wedge-and-Strip Anode, Spiralförmige Anoden, etc. einfache oder gekreuzte Delay-Line (DL) Anoden, bei denen Zeitdifferenzen gemessen werden, um die xy Positionen der Einzelphotonen bestimmen zu können.

Durch die Kombination von Nanoskop und der minimal-invasiven TSCSPC Methode entstehen neuartige Anwendungen. Die Kombination der minimal-invasiven abbildenden Lumineszenz-Zeitdomäne (ps/ns/$\mu$s Bereich) mit einem Sub-Mikroskop, einem Nanoskop, erschließt völlig neuartige Welten in der traditionellen Mikroskopie. Die Erfindung betrifft ein Verfahren und eine Anordnung (Fluoreszenz Lebensdauer Imaging Nanoskop) zur hochauflösenden Bilderfassung und spektroskopischen Analyse von Proben, basierend auf der Zeit- und Orts-korrelierten Multi-Parameter Erfassung von Einzelphotonen. Ein TSCSPC-FLIN System besteht typischerweise aus einem oder mehreren Ultrakurzpuls-Lasern (fs/ps), einer elektronischen Ansteuerung, einem Nanoskopstativ mit zwei sich gegenüberstehenden Objektiven durch die das Licht auf die Probe gelenkt und die emittierte Fluoreszenz gesammelt wird, sowie schnellen und sensitiven Detektoren. Als Detektoren kommen dabei mehrere parallel angeordnete TSCSPC (QA/QA bzw. QA/DL) und/oder gated-CCD Detektoren in Betracht. FLIN bedeutet Fluoreszenz Lebensdauer Nanoskopie, die die bekannte Methode der Fluoreszenz Lebensdauer Mikroskopie in den durch Lichtbeugung nicht-begrenzenten Nanobereich verschiebt (diffraction unlimitted, d.h. lateral < 200nm, axial < 500 nm).

Alle bisherigen Forschungsansätze zur Verbesserung der optischen Auflösung von Lichtmikroskopen zielten auf die Überwindung der Beugungsbegrenzung des Lichtes ohne die Strahlungsempfindlichkeit biologischer Systeme zu berücksichtigen. Mit modernen Systemen wie der 4Pi-Mikroskopie, dem Wellenfeld-Mikroskop (SMI), dem Multi-Fokalen-Multiphoten-System und der "Stimulated Emission Depletion" (STED) konnte eine signifikante Verbesserung des Auflösungsvermögens gegenüber der klassischen Lichtmikroskopie erzielt werden.

Zur Definition von "Nanoskopie" hat sich in der Literatur in den letzten Jahren folgende Klassifizierung durchgesetzt:

(i) Klassische Mikroskopie: 0.18 $\mu$m lateral in der Fokusebene und 0.8 $\mu$m axial.
(ii) Konfokale Mikroskopie: 0.18 $\mu$m lateral und 0.5 $\mu$m axial.
(iii) Nanoskopie: << 0.18 $\mu$m

a. STED: 40 nm axial und lateral;
b. SMI: 30 nm axial und lateral;
c. SPDM: 50 nm axial und lateral;
d. 4Pi: 100 nm axial, 250 nm lateral;

Der Einsatz dieser Techniken für die Langzeit Visualisierung dynamischer molekularer Interaktionen in lebenden Zellen ist jedoch aufgrund der für die Detektion mit den bisherigen Detektoren notwendigen hohen Bestrahlungsintensitäten nicht möglich. Der Einsatz hochempfindlicher Detektoren ermöglicht die Detektion und Analyse extrem schwacher Lichtsignale; dies ist in der so genannten zeit- und ortskorrelierten Einzelphotonen Analyse (Time- and Space-Correlated Single Photon Counting (TSCSPC)) verwirklicht. TSCSPC ist ein Verfahren zur simultanen Bestimmung der Fluoreszenzdynamiken innerhalb des Gesamtbildes und wird aufgrund seiner besonderen Eigenschaften sowohl in der Spektroskopie als auch in der biologischen und medizinischen Forschung eingesetzt. Sie verbindet Geschwindigkeit (Pikosekunden- und Nanosekunden Zeitskala) mit extrem hoher Sensitivität und Intensitätsauflösung (hoher dynamischer Bereich), die es erlaubt, innerhalb einer Probe gleichzeitig sehr stark und sehr schwach emittierende Signale zu studieren und einzelne Moleküle zu detektieren.

FLIN kann auch in Kombination mit langlebigen ($\mu$s/ms) Luminophoren verwendet werden, was, z.B., in der Mikrosekunden Anisotropie Imaging und Kolokalisations-Tracking resultiert.

Multi-Parameter FLIN (MP-FLIN) wird durch Verwendung von einem oder mehrerer TSCSPC bzw. gated-CCD Detektoren in der Detektoreinheit erreicht, die mit dem gepulsten Anregungslaser synchronisiert sind. Multiparameter Acquisition bedeutet dabei die simultane Erfassung von Zeit, Ort, Wellenlängen, Polarisation. Unter Multiparameter-FLIN wird die hochauflösende Aufnahme und Speicherung aller Systemparameter, die die physikalischen Eigenschaften jedes einzelnen Fluoreszenz-Photons beschreiben, verstanden:

$$h\,v = f\,[x,\ y,\ \Delta t(TAC),\ t(abs),\ \lambda\,(em),\ \|,\ \perp]$$

hierbei bedeuten: xy die Raumkoordinaten des eintreffenden Photons an der Photokathode; $\Delta t$(TAC) der Zeitunterschied

zwischen Laseranregungspuls und zugehörigem fluoreszierendem Photon, t(abs) die absolute Ankunftszeit jedes einzelnen Fluoreszenz-Photons am Detektor, λ (em) die Emissionswellenlänge, und ∥,⊥ die Richtung der Polarisation.

Minimal-invasive Bedingungen werden durch Verwendung von TSCSPC Detektoren und ultra-niedriger Anregung erreicht. Durch die der Erfindung zugrunde liegende Verwendung neuester zeit- und ortsauflösender Detektions-Techniken, welche sehr schnelle und extrem sensitive TSCSPC-Detektoren einsetzen, können die oben beschriebenen Beschränkungen der intensitätsbasierenden Methoden überwunden werden. Die Empfindlichkeit der Detektoren gestattet eine sehr schwache Fluoreszenzbeleuchtung; wodurch ein nanoskopisches Verfahren erreicht wird, das es ermöglicht, die Dynamik biologischer Prozesse in lebenden Zellen zu verfolgen, ohne nennenswerte Schädigungen wie Phototoxizität oder photodynamische Prozesse zu induzieren. Das heißt, die Visualisierung findet unter minimal-invasiven Bedingungen statt (Anregungsintensitäten ≤100 mW/cm$^2$). Eine kontinuierliche Verfolgung der Interaktion von Proteinen lässt sich nur mit Hilfe einer minimal-invasiven Fluoreszenz-Lebensdauer-Nanoskopie/Spektroskopie realisieren. FRET-Verifikation wird durch simultane Beobachtung von zwei Farbkanälen bzw. zwei Emissionsspektren in der Detektoreinheit erreicht. Die Vorteile des zeitaufgelösten FRET, im Gegensatz zu intensitäts-basierendem FRET, sind die Unabhängigkeit der Messung von der Farbstoffkonzentration, die erhöhte Empfindlichkeit bei gleichzeitig verminderten Hintergrundsignalen durch die Zeit-Korrelation, sowie die Möglichkeit, oszillierende Interaktionen nachweisen zu können. Da Farbstoffe, die als Label zur Protein-Protein Wechselwirkung bei FRET Experimenten verwendet werden, in meisten Fällen nicht monoexponentiell abklingen, ist eine Analyse, die sich nur auf die Änderung der Lebensdauer des Donors beschränken, nicht aussagekräftig. Vielmehr muß ein gleichschnelle Änderung (Anstieg) der Lebensdauer im Akzeptor detektiert werden, um auszuschließen, dass die beobachtete Verkürzung der Lebendsdauer im Donor durch andere Faktoren (Artefakte wie z.B. Autofluoreszenzhintergrund, Dimerenbildung, etc.) hervorgerufen wurde. Bei Einsatz einer DL- bzw. QA-Polychromatoreinheit werden die zeitaufgelösten Gesamtspektren von Donor und Akzeptor aufgenommen, deren Analyse die sogenannten DAS-Spektren (decay-associated spectra) liefert, worin der Vorzeichenwechsel des prä-exponentiellen Faktors der schnellen Komponente als Beweis für FRET gilt (FRET-Verifikation).

Tracking und minimal-invasive FCS-Korrelationen werden mittels Verwendung der absoluten Ankunftszeit der Einzelphotonen erreicht. Mit Hilfe von Point-Spread Function (PSF) Analyse ist es möglich, die Position eines Einzelmoleküls bzw. eines kleinen Objektes mit einer Genauigkeit von wenigen Nanometern zu bestimmen. Entsprechend ist es auch möglich, die Distanz zwischen mehreren Molekülen/Objekten, die mit unterschiedlichem spektralen Label ausgestattet sind, mit Nanometergenauigkeit zu bestimmen, sofern man die Objekte gleichzeitig bei mehreren Wellenlängen verfolgt. Durch die Akquisition der absoluten Ankunftszeit eines jeden Einzelmoleküls ist es möglich, die lineare Diffusion der Einzelobjekte auf der μs/ms Skala zu verfolgen. Gleichzeitig ist es möglich, diese Information zum neuartigen minimal-invasiven FCS-Imaging zu verwenden, wobei die Einzelmoleküle nicht, wie üblich, durch einen Fokus diffundieren müssen, sondern simultan im Weitfeld beobachtet werden. Da die Qualität der erzielten Fluoreszenzdynamik proportional mit der Anzahl der gesammelten Photonen zunimmt, folgt, dass auch die Trackinggeschwindigeit, d.h., die Fähigkeit, sich bewegende Objekte zu verfolgen bei konstanter Qualität der Dynamik mit der Anregungsintensität und somit mit der Anzahl der erzeugten Fluoreszenzphotonen zunimmt.

Ein-Photon und Multi-Photonanregung wird durch passende Wahl der Wellenlänge des Anregungslasers ermöglicht. Dabei kommen vorzugsweise Femtosekundenlaser zum Einsatz, in potentiellem Zusammenwirken mit minimal-invasiven Multi-Fokus Einrichtungen.

Konfokalität wird durch eine der bekannten Multi-Fokus Einrichtungen, wie Nipkov-Varianten, Multi-Linsenscheibe, Multi-Reflektion, diffraktive Optik, etc, die sich zwischen Laser und Nanoskop befinden, bzw. durch Zwei- oder MultiPhotonenanregung erreicht.

Verwendung von FLIN ist in der Zeit- und Phasen-Domäne möglich. Lasereinkopplung in das Nanoskop sowie Lichtkollektion und Projektion auf den Imaging Detektor sind bei der Phasen- und Zeitmethode identisch. Der Hauptunterschied beider Methoden liegt darin, dass bei der Phasenmethode amplitudenmodulierte Laser und empfindlichkeitsmodulierte Detektoren Anwendung finden und bei der Zeitmethode gepulste fs/ps-Laser Anwendung finden sowie SPC oder gegatete (getorte) CCD Detektoren verwendet werden. Alternativ zu den abbildenden Weitfeld- TSCSPC Detektoren können auch nicht-abbildende Punktdetektoren wie APD (avalanche photo diode) oder PMT (photo multipier tube) und MCP-PMT verwendet werden. Die Ortsauflösung wird bei letzteren Detektoren durch scanning des fokussierten Anregungslaser über die zu untersuchende Probe erreicht, wobei Laserscanning und Probenscanning zur Anwendung kommen können. Verwendung von nichtimaging Punktdetektoren ist dabei mittels synchronisiertem Einzelpunkt-Scanning in beiden Objektiven des Nanoskops möglich.

Anti-Bunching Imaging, zur Bestimmung der Anzahl der Emitter bei Einzelmolekülen, stellt die Imaging-Erweiterung einer bekannten Methode dar, bei der zwei unabhängigen Detektoren verwendet werden, deren Ausgangssignale als Start/Stop Eingangsignal eines TAC (time-to-amplitude converter) oder einer entsprechenden Zeitelektronikeinheit in der Multi-Detektor-Einheit, dienen. Anti-bunching: da ein Einzelmolekül nur ein Photon pro Laserpuls (unter SPC Bedingungen) emittieren kann, und somit nicht Start- und Stoppuls während des eingestellten Zeitfensters erzeugen kann, gelingt es, durch Verwendung von zwei unabhängigen SPC Detektoren, die durch den aufgespaltenen Strahlengang der Emission beleuchtet werden, Einzelmoleküle von kleinen Aggregaten zu unterscheiden.

Ko-Lokalisations-Tracking, d.h. simultanes Translations- und Rotations-Tracking, als Alternative zu FRET bei großen Proteinen wird durch simultane Beobachtung von zwei Farben und jeweils zwei Polarisationsrichtungen in der Detektoreinheit ermöglicht. Bei der FRET Methode muss sich der Abstand zwischen Donor und Akzeptor möglicht innerhalb des sogenannten Försterradius (< 100 Angström) befinden. Je größer die verwendeten Proteine werden, desdo geringer wird die Chance, dass die daran gekoppelten Donor/Akzeptor obige Bedingung erfüllen und FRET kann nicht mehr beobachtet werden. Werden Donor und Akzeptor (oder zwei farblich und möglichst auch dynamisch unterschiedliche Fluoreszenzproben) dagegen gleichzeitig (durch Ein- oder Zwei-Laseranregung) angeregt, kann durch Zwei-Farbbeobachtung der Fluoreszenzdynamik (Linear- und/oder Rotationsdynamik) Proteinkomplex-Formation festgestellt werden, da dann beide Fluoreszenzproben mit gleicher Geschwindigkeit diffundieren und rotieren (Ko-lokalisation).

Pikosekunden Anisotropie-Imaging wird durch simultane oder sequentielle Beobachtung beider Polarisationsrichtungen mittels eines abbildenden Detektor (z.B. QA) erreicht, wobei die ps/ns/$\mu$s Anisotropie-Dynamik des Gesamtbildes erhalten wird. Durch Verwendung von zeitauflösenden Imaging Detektoren, aber auch scannenden Systemen mit Punktdetektoren, wird gleichzeitig die Anisotropiebestimmung innerhalb der gesamten Bildfläche ermöglicht.

In der Dektoreinheit können auch Dual-Image oder Quattro-Image Module verwendet werden um mehrere Bilder, z.B. zwei Farben und zwei Polarisationen, auf einen einzigen Detektor zu projizieren. Durch Verwendung von optischen Einheiten, die zwei bis vier Bilder auf einen abbildenden Detektor projizieren, können z.B. simultane Zwei-Farben- und/oder Zwei-Polarisationsbeobachtungen durchgeführt werden, die z. B. zur FRET-Verifizierung und Pikosekunden-Anisotropiebestimmung verwendet werden können.

Multi-Farben Nanoskopie and Multi-Farben FLIN mit 1-nm Ortsauflösung wird durch PSF- (point-spread function) Modellierung zweier Punktquellen erreicht, die bei zwei verschiedenen Farben emittieren, wobei beide Lichtpunkte unterschiedlicher Farbe auf einem abbildenden Detektor projiziert werden. Es ist bekannt, dass durch PSF-Modellierung, die Position eines Einzelmoleküls oder irgendeiner Punktquelle mit $\Delta x$ nm Genauigkeit bestimmt werden kann, wobei $\Delta x = 1.3$ nm erzielt worden ist. Es erscheint also möglich, die Entfernung zweier Punktquellen mit $\Delta X = [(\Delta x_1)^2 + (\Delta x_2)^2]^{1/2}$ nm Genauigkeit zu bestimmen und dadurch eine nanoskopische Auflösung von 1 nm zu erreichen, vorausgesetzt die beiden Emitter emittieren bei verschiedenen Wellenlängen. Für $\Delta x_1 = \Delta x_2 = 1.3$ nm, $\Delta X = [(1.3)^2 + (1.3)^2]^{1/2} = 1.85$ nm, wenn ein konfokales Mikroskop von 250 nm Auflösung verwendet wird. Wenn z.B. ein 4Pi Nanoskop mit 110 nm Auflösung verwendet wird, bekommt man theoretisch $\Delta X = [(0.6)^2 + (0.6)^2]^{1/2} = 0.85$ nm Zweifarb-Auflösung. Theoretisch ist die Zwei- oder Multifarb-Auflösung unbegrenzt (proportional zu $(N)^{1/2}$ wobei N die Anzahl der gesammelten Photonen ist) und hauptsächlich durch mechanische, wie z.B. thermische Expansion von xy-Tisch, optischer Elemente und Detektor, und optischen Eigenschaften, wie z.B. Farb-Aberation, etc., des Nanoskops und durch die Genauigkeit der Kalibration des Nanoskops, z.B. Präzision der Bewegung des xy-Tisch, limitiert. Durch Verwendung von Materialien mit minimalen Expansionskoeffizienten, Thermostatierung des vibrationsisolierten Nanoskops, präzisen Motortischen, etc, kann die 1 nm Grenze erreicht werden. Durch Verwendung von zwei Emissionsfarben und deren räumlich getrennte Projektion auf einen Bilddetektor, kann also die traditionelle Auflösungsgrenze der Mikroskopie/Nanoskopie gebrochen werden.

Durch Verwendung der Kombination von zeitauflösendem Imaging Detektor mit einem Imaging Polychromator, können eine Vielzahl von zeitaufgelösten Emissionsspektren simultan beobachtet werden, entlang der Diagonalen des Bildes. Dies ist von großem Vorteil, z.B., in Zellmessungen, wo die Spektren von FRET-Donor und Akzeptor sowie Autofluoreszenz und Hintergrund simultan erfasst werden können und, z.B., FRET-Verifikation ermöglicht wird. Alternativ kann ein Lineardetektor (z.B. DL) eingesetzt werden, der das zeitaufgelöste Spektrum des Bildzentrums liefert.

Durch Verwendung von Farbstoffen mit langen Lumineszenzlebensdauern im $\mu$s/ms Bereich, z.B. Ruthenium- und Rhenium-Komplex, und sogenannten Multi-Stop-TACs, in der Zeitelektronik-Einheit, Fig. 1, kann Mikrosekunden Anisotropie Imaging zur Bestimmung von Rotationszeiten und Komplexbildung großer Proteine erreicht werden.

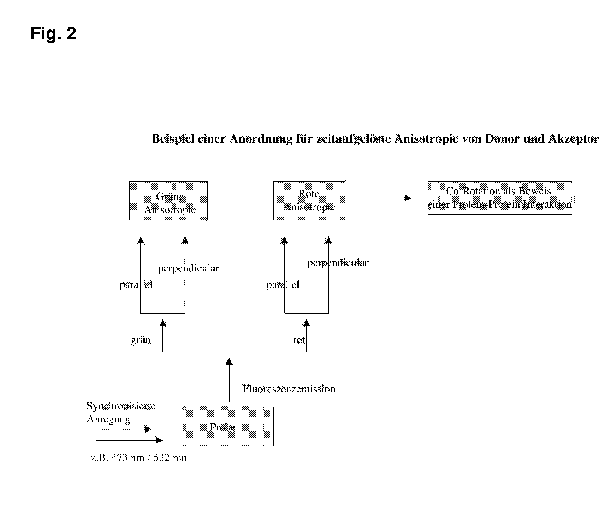

Bei einer FLIM Anwendung ist die Nanoskopie-Einheit in Fig. 1 durch ein Standard- Fluoreszenzmikroskop ersetzt, das wie das Nanoskop, einen dichroitischen Spiegel und Emissionsfilter enthält. Zur FLIM Anwendung eignen sich: Ko-Lokalisations Tracking, Dual- und Quattro-Image Module (Fig. 2); Multi-Farben Nanoskopie und Multi-Farben FLIM.

Beim 4Pi-Verfahren als Nanoskopeinheit wird bevorzugt einen 1-Farben-Laseranregung verwendet, bei STED, SMI und SPDM eine 2-Farben-Laseranregung.

In einem Ausführungsbeispiel wird eine 1-Photonanregung bevorzugt bei SMI, 4Pi, STED verwendet. In einem anderen Ausführungsbeispiel wird eine 2-Photonanregung bei 4Pi, STED, SMI, oder SPDM verwendet.

Fig. 2 zeigt eine Anordnung zur simultanen Bestimmung von Pikosekunden-Anisotropiebilder von kurzwelliger (grün) und langwelliger (rot) Komponenten eines Zwei-Farb Emissionssystems: Ko-Lokalisations Tracking. Dabei wird die Probe durch einen oder mehrere polarisierte Pikosekunden-Laser synchronisiert angeregt, z.B. durch 400, 430, 475, 635 nm Diodenlaser oder 473 und 532 nm frequenzverdoppelte YAG Laser. Es können dabei ein oder zwei Detektoren zum Einsatz kommen. Im ersten Fall wird dabei ein Quattro-Image Modul verwendet, in dem das von Probe und Nanoskop kommende Emissionslicht zuerst, durch einen dichroitischen Strahlteiler, in eine langwellige und kurzwellige Komponente zerlegt wird, die dann jeweils weiter durch zwei polarisations-trennende Strahlteiler in die parallelen und senkrechten Anteile zerlegt werden. Im zweiten Fall, bei Einsatz von zwei Detektoren, werden drei individuelle Dual-Image Teilermodule verwendet, wobei im ersten die Farben getrennt werden und in den zwei weiteren, die jeweils einen Detektor tragen, anschließend die Polarisationsrichtungen.

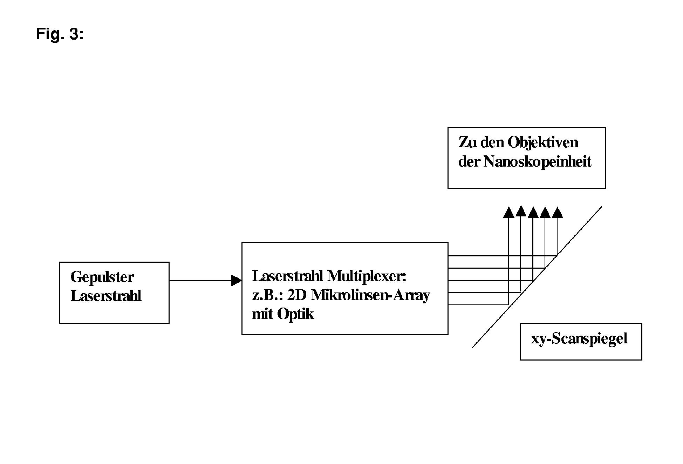

Fig. 3 zeigt ein weiteres Ausführungsbeispiel zur Fluoreszenz-Lebendsdauer-Imaging-Nanoskopie in schematischer Form mit Multi-Fokus-Einrichtung. Ein Laserstrahl trifft auf eine Multi-Fokus-Einrichtung, hier einen Laserstrahl-Multiplexer, bestehend z. B. aus einem zweidimensionalen Mikrolinsen-Array mit Optik. Eine solche Vorrichtung kommt beim Multi-Punkt Scanning zum Einsatz. Dabei werden bei der 2-Photonenanregung Durchschnitts- und Spitzenleistungen um den Faktor der Anzahl der Scanfoki reduziert. Dies ermöglicht eine minimal-invasive Beobachtung, die den lebenden Zustand geringst-möglich beeinflusst. Der Scanspiegel leitet abschließend die den Multiplexer verlassenden Parallelstrahlen zu den Objektiven der Nanoskopeinheit. Die Multi-Foki entstehen auf der Probe, nachdem der 2D-Laserarray durch die Nanoskopobjektive geleitet wurde.

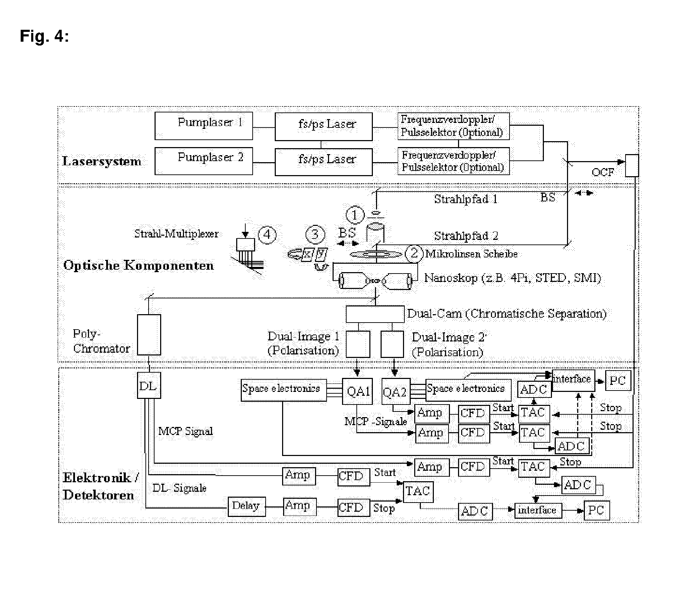

Fig. 4 zeigt eine detaillierte Ausarbeitung eines FLIN Systems, entsprechend Fig. 1. Das Lasersystem kann aus einem oder mehreren synchronisierten Kurzpulslasern (fs/ps) unterschiedlicher Laserlinien im sichtbaren Bereich (fix oder durchstimmbar) bestehen, aber auch im infraroten Bereich für Zwei-Photonen oder Multiphotonen-Anregung sich befinden. Die Wiederholrate ist typischerweise im MHz-Bereich, z.B. 1-80 MHz, und kann durch einen Pulsselektor bestimmt werden. Die Pulse werden getrennt oder vereint, direkt oder mittels Lichtleiter auf unterschiedlichen Strahlpfaden mit Hilfe von Strahlteilern (BS = Beamsplittern), Spiegeln, Filtern, Linsen und/oder anderen optischen Komponenten in das Nanoskop gelenkt. Ein Teil des Lichtes wird an einem Strahlteiler (BS) auf einen optischen Konstant-Fraction Diskriminator (OCF) gelenkt, der das Stopsignal für die Zeiteinheiten der Detektoren liefert.

Das Strahlprofil kann entweder aufgeweitet als Ganzfeldbeleuchtung (Strahlpfad 1) oder als Punktlichtquelle (Strahlpfad 2) in das Nanoskop (FLIN) oder Mikroskop (FLIM) mit Hilfe weiterer beweglicher optischer Komponenten (Doppelpfeile) gelenkt werden. Optional kann ein Raumfilter (1) eine Scan-Einheit aus beweglichen Spiegeln (3), eine Mikrolinsenscheibe (2), ein StrahlMultiplexer zur Erzeugung multipler Foki (4) oder ähnliche, die Laserintensität reduzierende und/oder das Strahlprofil verbessernde optische Elemente eingefügt werden (siehe auch Detailabbildung 3). Das von der Probe im Nanoskop/ Mikroskop erzeugte Fluoreszenzlicht wird spektral und/oder in seine Polarisationsrichtungen aufgeteilt und wahlweise, mittels Strahlteiler, auf einen oder mehrere Detektoren (DL /QA) gelenkt, die untereinander und mit den Lasern synchronisiert sind.

Kommt eine 4Pi, STED oder SPDM Methode zu Einsatz, wird beim erfindungsgemäßen minimal-invasiven FLIN bevorzugt ein zeitauflösender Imaging Detektor mit Multi-Punkt-Scanning verwendet. Bei der 2-Photonenanregung werden Durchschnitts- und Spitzenleistungen um den Faktor der Anzahl der Scanfoki reduziert und minimal-invasive Beobachtung ermöglicht, die den lebenden Zustand geringst-möglich beeinflusst.

Allein beim SMI Verfahren wird in einem bevorzugten Ausführungsbeispiel das Multi-Punkt-Scanning durch eine Weitfeldbeleuchtung ersetzt. Bei Weitfeldbeleuchtung und 1-Photonenanregung werden Durchschnittsleistungen von < 1W/cm2 verwendet, um minimal-invasive Beobachtung zu garantieren.

In einem weiteren bevorzugten Ausführungsbeispiel wird SMI-FLIN zusammen mit 2-Photonenanregung und Multi-Punkt-Scanning durchgeführt.

Zur Beobachtung von schnellen Vorgängen ist auch eine Erhöhung der Anregungsleistung möglich, unter partieller Aufgabe der Minimal-Invasivität, um einen sehr hohen Datendurchsatz zu erreichen.

Die Erfindung beschränkt sich nicht auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

**Patentansprüche**

1.  Vorrichtung zur Fluoreszenz-Lebensdauer Imaging Nanoskopie, umfassend zwei synchronisierte Kurzpulslaser, die mittels erster optischer Elemente mit einer Mikroskopie-Einheit gekoppelt sind, welche eine Probe beinhaltet, **gekennzeichnet dadurch, dass**
    die Mikroskopie-Einheit über zweite optische Elemente mit einer zeit- und ortssensitven Detektoreinheit verbunden ist, die einen abbildenden Weitfeld-Time-and-Space-Correlated-Single-Photon-Counting-Detektor und zur gleichzeitigen Aufnahme mehrerer Bilder ein Quattro-Image-Modul umfasst, wobei das von Probe und Mikroskopie-Einheit kommende Emissionslicht zuerst, durch einen dichroitischen Strahlteiler, in eine langwellige und kurzwellige Komponente zerlegt wird, die dann jeweils weiter durch zwei polarisations-trennende Strahlteiler in die parallelen und senkrechten Polarisationsanteile zerlegt werden, und
    die Vorrichtung eine Kontrolleinheit zur Steuerung und Point-Spread-Modellierung zweier Punktquellen aufweist, die bei verschiedenen Farben emittieren, und deren Lichtpunkte unterschiedlicher Farbe auf den abbildenden Detektor projiziert werden, wobei
    die Laser, die Mikroskopie-Einheit und die Detektor-Einheit über die Kontrolleinheit synchronisiert sind.

2. Vorrichtung zur Fluoreszenz-Lebensdauer Imaging Nanoskopie, umfassend zwei synchronisierte Kurzpulslaser, die mittels erster optischer Elemente mit einer Mikroskopie-Einheit gekoppelt sind, welche eine Probe beinhaltet, **gekennzeichnet dadurch, dass**
die Mikroskopie-Einheit über zweite optische Elemente mit einer zeit- und ortssensitiven Detektoreinheit verbunden ist, die zwei abbildende Weitfeld-Time-and-Space-Correlated-Single-Photon-Counting-Detektoren und zur gleichzeitigen Aufnahme mehrerer Bilder drei individuelle Dual-Image Teilermodule umfasst, wobei im ersten das von Probe und Mikroskopie-Einheit kommende Emissionslicht, durch einen dichroitischen Strahlteiler, in eine langwellige und kurzwellige Komponente zerlegt wird, und in den zwei weiteren; die jeweils einen der Detektoren tragen, anschließend die Polarisationsrichtungen getrennt werden, und
die Vorrichtung eine Kontrolleinheit zur Steuerung und Point-Spread-Modellierung zweier Punktquellen aufweist, die bei verschiedenen Farben emittieren, und deren Lichtpunkte unterschiedlicher Farbe auf den abbildenden Detektor projiziert werden, wobei
die Laser, die Mikroskopie-Einheit und die Detektor-Einheit über die Kontrolleinheit synchronisiert sind.

3. Vorrichtung zur Fluoreszenz-Lebensdauer Imaging Nanoskopie nach Anspruch 1 oder 2, **dadurch gekennzeichnet, dass** die Laser Piko- oder Femtosekundenlaser sind und/oder eine Frequenz von 1-100 MHz aufweisen und/oder eine 1-Photonen-, eine 2-Photonen- oder eine Multiphotonenanregung realisieren.

4. Vorrichtung zur Fluoreszenz-Lebensdauer Imaging Nanoskopie nach einem der vorhergehenden Ansprüche, **dadurch gekennzeichnet, dass** die Mikroskopie-Einheit ein Wellenfeld-Mikroskop, ein Spektrales-Präzisions-Distanz-Mikroskop, eine 4Pi-Einheit oder eine Stimulated-Emission-Depletion-Einheit umfasst.

5. Vorrichtung zur Fluoreszenz-Lebensdauer Imaging Nanoskopie nach einem der vorhergehenden Ansprüche, **dadurch gekennzeichnet, dass** die ersten optischen Elemente Linsen und/oder Lichtleiter umfassen, sowie Teilerspiegel und/oder Filter und/oder eine Multi-Fokus-Einrichtung umfassen.

6. Vorrichtung zur Fluoreszenz-Lebensdauer Imaging Nanoskopie nach einem der vorhergehenden Ansprüche, **dadurch gekennzeichnet, dass** die Kontrolleinheit ein Rechner ist.

7. Vorrichtung zur Fluoreszenz-Lebensdauer Imaging Nanoskopie nach einem der vorhergehenden Ansprüche, **dadurch gekennzeichnet, dass** die Visualisierung unter minimal-invasiven Bedingungen mit Anregungsintensitäten $\leq 100\ \text{mW/cm}^2$ stattfindet und/oder mit Anregungsintensitäten von durchschnittlich $10\ \text{mW/cm}^2$ stattfindet.

8. Vorrichtung zur Fluoreszenz-Lebensdauer Imaging Nanoskopie nach Anspruch 5, **dadurch gekennzeichnet, dass** die Multi-Fokus-Einrichtung eine Multi-Mikro-Linsenscheibe, einen Strahlmultiplexer oder eine Variante der Nipkov-Scheibe umfasst und/oder eine Multi-Linsenscheibe oder derart ausgebildet ist, ein Nipkov-Verfahren auszuführen und/oder eine diffraktive Optik umfasst.

9. Vorrichtung zur Fluoreszenz-Lebensdauer Imaging Nanoskopie nach einem der vorhergehenden Ansprüche, **dadurch gekennzeichnet, dass** der oder die Time-and-Space-Correlated-Single-Photon-Counting-Detektoren leitende Multi-Anoden oder resistive Multi-Anoden umfasst oder umfassen.

10. Verfahren zur Fluoreszenz-Lebensdauer Imaging Nanoskopie, umfassend die Schritte:

einkoppeln zweier synchronisierter Kurzpulslaser mittels erster optischer Elemente in eine Mikroskopie-Einheit, welche eine Probe beinhaltet,
verbinden der Mikroskopie-Einheit über zweite optische Elemente mit einer zeit- und ortssensitven Detektoreinheit, die einen abbildenden Weitfeld-Time-and-Space-Correlated-Single-Photon-Counting-Detektor und zur gleichzeitigen Aufnahme mehrerer Bilder ein Quattro-Image-Modul umfasst, wobei das von Probe und Mikroskopie-Einheit kommende Emissionslicht zuerst, durch einen dichroitischen Strahlteiler, in eine langwellige und kurzwellige Komponente zerlegt wird, die dann jeweils weiter durch zwei polarisations-trennende Strahlteiler in die parallelen und senkrechten Polarisationsanteile zerlegt werden,
vornehmen und steuern einer Point-Spread-Modellierung zweier Punktquellen durch eine Kontrolleinheit, wobei die zwei Punktquellen bei verschiedenen Farben emittieren, und deren Lichtpunkte unterschiedlicher Farbe auf den abbildenden Detektor projiziert werden, und
synchronisieren von Laser, Mikroskopie-Einheit und Detektor-Einheit über die Kontrolleinheit.

11. Verfahren zur Fluoreszenz-Lebensdauer Imaging Nanoskopie, umfassend die Schritte:

einkoppeln zweier synchronisierter Kurzpulslaser mittels erster optischer Elemente in eine Mikroskopie-Einheit, welche eine Probe beinhaltet,

verbinden der Mikroskopie-Einheit über zweite optische Elemente mit einer zeit- und ortssensitiven Detektoreinheit, die zwei abbildende Weitfeld-Time-and-Space-Correlated-Single-Photon-Counting-Detektoren und zur gleichzeitigen Aufnahme mehrerer Bilder drei individuelle Dual-Image Teilermodule umfasst, wobei im ersten das von Probe und Mikroskopie-Einheit kommende Emissionslicht, durch einen dichroitischen Strahlteiler, in eine langwellige und kurzwellige Komponente zerlegt wird und in den zwei weiteren, die jeweils einen der Detektoren tragen, anschließend die Polarisationsrichtungen getrennt werden,

vornehmen und steuern einer Point-Spread-Modellierung zweier Punktquellen durch eine Kontrolleinheit, wobei die zwei Punktquellen bei verschiedenen Farben emittieren, und deren Lichtpunkte unterschiedlicher Farbe auf den abbildenden Detektor projiziert werden, und

synchronisieren von Laser, Mikroskopie-Einheit und Detektor-Einheit über die Kontrolleinheit.

12. Verfahren zur Fluoreszenz-Lebensdauer Imaging Nanoskopie nach Anspruch 10 oder 11, **dadurch gekennzeichnet, dass** das Verfahren folgenden Schritt umfasst: Multipunkt-Scanning zur gleichzeitigen Anregung mehrerer Punkte der Probe.

13. Verfahren zur Fluoreszenz-Lebensdauer Imaging Nanoskopie nach einem der Ansprüche 10 bis 12, **dadurch gekennzeichnet, dass** das Verfahren folgenden Schritt umfasst: 1-Photonen- und/oder 2-Photonen und/oder Multiphotonenanregung der Probe.

14. Verfahren zur Fluoreszenz-Lebensdauer Imaging Nanoskopie nach mindestens einem der Ansprüche 10bis 13, **dadurch gekennzeichnet, dass** das Verfahren folgenden Schritt umfasst: Einkopplung von gepulsten Pikosekunden- oder Nanosekunden Lasern in die Mikroskopie-Einheit.

15. Verfahren zur Fluoreszenz-Lebensdauer Imaging Nanoskopie nach mindestens einem der Ansprüche 10 bis 14, **dadurch gekennzeichnet, dass** das Verfahren folgenden Schritt umfasst: Verifizieren von Fluoreszenz-Resonanz-Energieübertragung durch simultane Beobachtung von zwei oder mehr Farbkanälen bzw. Emissionsspektren.

16. Verfahren zur Fluoreszenz-Lebensdauer Imaging Nanoskopie nach einem der Ansprüche 10 bis 15, **dadurch gekennzeichnet, dass** das Verfahren folgende Schritte umfasst: Verwenden der absoluten Ankunftszeit der Einzelphotonen zum Tracking und der FCS-Korrelation und/oder Auswählen der Wellenlänge des Anregungslasers zur 1-Photon oder Multi-Photonanregung.

17. Verfahren zur Fluoreszenz-Lebensdauer Imaging Nanoskopie nach einem der Ansprüche 10 bis 16, **dadurch gekennzeichnet, dass** das Verfahren folgenden Schritt umfasst: Herstellen von Minimalinvasivität durch Multi-Fokus Einrichtungen, wobei die Multi-Fokus-Einrichtungen einen Laserstrahl in ein Array von parallelen Laserstrahlen umwandeln, und/oder der Konfokalität bei 2-Photonen-Anregung.

18. Verfahren zur Fluoreszenz-Lebensdauer Imaging Nanoskopie nach Anspruch 10, **dadurch gekennzeichnet, dass** das Verfahren folgenden Schritt umfasst: Beobachtung einer Vielzahl von zeitaufgelösten Emissionsspektren entlang der Diagonalen des Bildes mittels Kombination des TSCSPC-Detektors mit einem Imaging Polychromator.

19. Verfahren zur Fluoreszenz-Lebensdauer Imaging Nanoskopie nach einem der Ansprüche 10 bis 18, **dadurch gekennzeichnet, dass** das Verfahren folgenden Schritt umfasst: Mikrosekunden-Anisotropie-Imaging und Kolokalisation durch Verwendung von Farbstoffen mit langen Lumineszenzlebensdauern.

20. Verfahren zur Fluoreszenz-Lebensdauer Imaging Nanoskopie nach einem der Ansprüche 10 bis 19, **dadurch gekennzeichnet, dass** SMI-FLIN mit einer Weitfelddetektoreinheit oder zusammen mit Multi-Punkt-Scanning durchgeführt wird.

## Claims

1. A device for fluorescence lifetime imaging nanoscopy, comprising two synchronized short-pulse lasers, which are coupled by means of first optical elements with a microscopy unit holding a sample,
**characterized in that**
the microscopy unit is connected by means of second optical elements to a time- and location-sensitive detector unit which comprises an imaging wide field time- and space-correlated single photon counting detector and, for the simultaneous acquisition of multiple images, a quattro image module, wherein the emission light coming from the sample and the microscopy unit is first split by a dichroic beam splitter into a long-wave and a short-wave component, which are then each further split by two polarization-separating beam splitters into the parallel and perpendicular polarization components, and
the device comprises a control unit for controlling and point-spread modeling of two point sources, which emit at different colors, and the different-colored points of light of which are projected onto the imaging detector, wherein the lasers, the microscopy unit and the detector unit are synchronized via the control unit.

2. A device for fluorescence lifetime imaging nanoscopy, comprising two synchronized short-pulse lasers, which are coupled by means of first optical elements with a microscopy unit holding a sample,
**characterized in that**
the microscopy unit is connected by means of second optical elements to a time- and location-sensitive detector unit which comprises two imaging wide field time- and space-correlated single photon counting detectors and, for the simultaneous acquisition of multiple images, three individual dual image splitter modules, wherein in the first the emission light coming from the sample and microscopy unit is split by a dichroic beam splitter into a long-wave and a short-wave component, and in the other two, which each have one of the detectors, the polarization directions are then separated, and
the device comprises a control unit for controlling and point-spread modeling of two point sources, which emit at different colors, and the different-colored points of light of which are projected onto the imaging detector, wherein the lasers, the microscopy unit and the detector unit are synchronized via the control unit.

3. The device for fluorescence lifetime imaging nanoscopy according to Claim 1 or 2, **characterized in that** the lasers are picosecond or femtosecond lasers and/or have a frequency of 1-100 MHz and/or produce 1-photon, 2-photon or multiphoton excitation.

4. The device for fluorescence lifetime imaging nanoscopy according to any one of the preceding claims, **characterized in that** the microscopy unit comprises a wave field microscope, a spectral precision distance microscope, a 4Pi unit or a stimulated emission depletion unit.

5. A device for fluorescence lifetime imaging nanoscopy according to any one of the preceding claims, **characterized in that** the first optical elements comprise lenses and/or optical fibers as well as beam splitting mirrors and/or filters and/or a multi-focus device.

6. A device for fluorescence lifetime imaging nanoscopy according to any one of the preceding claims, **characterized in that** the control unit is a computer.

7. A device for fluorescence lifetime imaging nanoscopy according to any one of the preceding claims, **characterized in that** the visualization takes place under minimally invasive conditions with excitation intensities $\leq$ 100 mW/cm$^2$ and/or with excitation intensities of on average 10 mW/cm$^2$.

8. A device for fluorescence lifetime imaging nanoscopy according to Claim 5, **characterized in that** the multi-focus device comprises a multi-microlens disc, a beam multiplexer or a variant of the Nipkow disc and/or a multilens disc or is configured to execute a Nipkow process and/or comprises a diffractive optic.

9. A device for fluorescence lifetime imaging nanoscopy according to any one of the preceding claims, **characterized in that** the time- and space-correlated single photon counting detector(s) comprise(s) conducting multi-anodes or resistive multi-anodes.

10. A method for fluorescence lifetime imaging nanoscopy, comprising the steps of:

coupling two synchronized short-pulse lasers by means of first optical elements into a microscopy unit holding a sample,
connecting the microscopy unit by means of second optical elements to a time- and location-sensitive detector unit which comprises an imaging wide field time- and space-correlated single photon counting detector and, for the simultaneous acquisition of multiple images, a quattro image module, wherein the emission light coming from the sample and the microscopy unit is first split by a dichroic beam splitter into a long-wave and a short-wave component, which are then each further split by two polarization-separating beam splitters into the parallel and perpendicular polarization components,

carrying out and controlling a point-spread modeling of two point sources by a control unit, wherein the two point sources emit at different colors and the different-colored points of light of which are projected onto the imaging detector, and

synchronizing the laser, microscopy unit and detector unit via the control unit.

11. A method for fluorescence lifetime imaging nanoscopy, comprising the steps of:

coupling two synchronized short-pulse lasers by means of first optical elements into a microscopy unit holding a sample,

connecting the microscopy unit by means of second optical elements to a time- and location-sensitive detector unit which comprises two imaging wide field time- and space-correlated single photon counting detectors and, for the simultaneous acquisition of multiple images, three individual dual image splitter modules, wherein in the first the emission light coming from the sample and microscopy unit is split by a dichroic beam splitter into a long-wave and a short-wave component, and in the other two, which each have one of the detectors, the polarization directions are then separated,

carrying out and controlling a point-spread modeling of two point sources by a control unit, wherein the two point sources emit at different colors and the different-colored points of light of which are projected onto the imaging detector, and

synchronizing the laser, microscopy unit and detector unit via the control unit.

12. The method for fluorescence lifetime imaging nanoscopy according to Claim 10 or 11, **characterized in that** the method comprises the following step: multipoint-scanning in order to simultaneously excite multiple points of the sample.

13. The method for fluorescence lifetime imaging nanoscopy according to any one of Claims 10 to 12, **characterized in that** the method comprises the following step: 1-photon and/or 2-photon and/or multiphoton excitation of the sample.

14. The method for fluorescence lifetime imaging nanoscopy according to at least one of Claims 10 to 13, **characterized in that** the method comprises the following step: coupling of pulsed picosecond or nanosecond lasers into the microscopy unit.

15. The method for fluorescence lifetime imaging nanoscopy according to at least one of Claims 10 to 14, **characterized in that** the method comprises the following step: verifying of fluorescence resonance energy transfer by simultaneous observation of two or more color channels and/or emission spectra.

16. The method for fluorescence lifetime imaging nanoscopy according to any one of Claims 10 to 15, **characterized in that** the method comprises the following steps: using the absolute time of arrival of the individual photons for tracking and FCS correlation and/or selecting the wavelength of the excitation laser for 1-photon or multiphoton excitation.

17. The method for fluorescence lifetime imaging nanoscopy according to any one of Claims 10 to 16, **characterized in that** the method comprises the following step: producing minimal invasivity by multi-focus devices, wherein the multi-focus devices convert a laser beam into an array of parallel laser beams, and/or confocality in the case of 2-photon excitation.

18. The method for fluorescence lifetime imaging nanoscopy according to Claim 10, **characterized in that** the method comprises the following step: observing a variety of time-resolved emission spectra along the diagonal of the image using a combination of the TSCSPC detector with an imaging polychromator.

19. The method for fluorescence lifetime imaging nanoscopy according to any one of Claims 10 to 18, **characterized in that** the method comprises the following step: microsecond anisotropy imaging and colocalization by using dyes with long luminescence lifetimes.

20. The method for fluorescence lifetime imaging nanoscopy according to any one of Claims 10 to 19, **characterized in that** SMI-FLIN is carried out with a wide field detector unit or together with multi-point scanning.

**Revendications**

1. Dispositif de nanoscopie par imagerie de durée de vie de fluorescence, comprenant deux lasers à impulsions courtes synchronisés qui, au moyen de premiers éléments optiques, sont couplés à une unité de microscopie qui contient un échantillon,
**caractérisé en ce que**
l'unité de microscopie, par le biais de deuxièmes éléments optiques, est connectée à une unité de détecteur sensible au temps et à l'emplacement qui comprend un détecteur imageur à champ large Time-and-Space-Correlated-Single-Photon-Counting et un module Quattro-Image pour l'enregistrement simultané de plusieurs images, la lumière d'émission provenant de l'échantillon et de l'unité de microscopie étant d'abord décomposée par un séparateur de faisceaux dichroïque en une composante à grande longueur d'onde et une composante à courte longueur d'onde qui sont ensuite chacune décomposées de nouveau, par deux séparateurs de faisceaux séparant la polarisation, en fraction de polarisation parallèles et perpendiculaires, et
le dispositif présente une unité de contrôle pour la commande et la modélisation Point-Spread de deux sources ponctuelles qui émettent pour différentes couleurs, et leurs points lumineux de différentes couleurs sont projetés sur le détecteur imageur,
les lasers, l'unité de microscopie et l'unité de détecteur sont synchronisés par le biais de l'unité de contrôle.

2. Dispositif de nanoscopie par imagerie de durée de vie de fluorescence, comprenant deux lasers à impulsions courtes synchronisés qui, au moyen de premiers éléments optiques, sont couplés à une unité de microscopie qui contient un échantillon,
**caractérisé en ce que**
l'unité de microscopie, par le biais de deuxièmes éléments optiques, est connectée à une unité de détecteur sensible au temps et à l'emplacement qui comprend deux détecteurs imageurs à champ large Time-and-Space-Correlated-Single-Photon-Counting et trois modules séparateurs Dual-Image individuels pour l'enregistrement simultané de plusieurs images, la lumière d'émission provenant de l'échantillon et de l'unité de microscopie étant, dans le premier module séparateur, décomposée par un séparateur de faisceaux dichroïque en une composante à grande longueur d'onde et une composante à courte longueur d'onde et, dans les deux autres modules séparateurs qui portent chacun un des détecteurs, les directions de polarisation étant ensuite séparées, et
le dispositif présente une unité de contrôle pour la commande et la modélisation Point-Spread de deux sources ponctuelles qui émettent pour différentes couleurs, et leurs points lumineux de différentes couleurs sont projetés sur le détecteur imageur,
les lasers, l'unité de microscopie et l'unité de détecteur sont synchronisés par le biais de l'unité de contrôle.

3. Dispositif de nanoscopie par imagerie de durée de vie de fluorescence selon la revendication 1 ou 2, **caractérisé en ce que** les lasers sont des lasers picosecondes ou femtosecondes et/ou présentent une fréquence de 1-100 MHz et/ou réalisent une excitation monophotonique, biphotonique ou multiphotonique.

4. Dispositif de nanoscopie par imagerie de durée de vie de fluorescence selon l'une des revendications précédentes, **caractérisé en ce que** l'unité de microscopie comprend un microscope en champ d'ondes, un microscope Spectral Precision Distance, une unité 4Pi ou une unité Stimulated-Emission-Depletion.

5. Dispositif de nanoscopie par imagerie de durée de vie de fluorescence selon l'une des revendications précédentes, **caractérisé en ce que** les premiers éléments optiques comprennent des lentilles et/ou ou des conduits de lumière, ainsi que des miroirs diviseurs et/ou des filtres et/ou un dispositif multifocus.

6. Dispositif de nanoscopie par imagerie de durée de vie de fluorescence selon l'une des revendications précédentes, **caractérisé en ce que** l'unité de contrôle est un ordinateur.

7. Dispositif de nanoscopie par imagerie de durée de vie de fluorescence selon l'une des revendications précédentes, **caractérisé en ce que** la visualisation a lieu dans des conditions faiblement invasives avec des intensités d'excitation $\leq 100$ mW/cm$^2$ et/ou avec des intensités d'excitation de 10 mW/cm$^2$ en moyenne.

8. Dispositif de nanoscopie par imagerie de durée de vie de fluorescence selon la revendication 5, **caractérisé en ce que** le dispositif multifocus comprend un disque multi-microlenticulaire, un multiplexeur de faisceaux ou une variante du disque de Nipkow et/ou un multidisque lenticulaire, ou est constitué pour réaliser un procédé de Nipkow et/ou comprend une optique diffractive.

**9.** Dispositif de nanoscopie par imagerie de durée de vie de fluorescence selon l'une des revendications précédentes, **caractérisé en ce que** le ou les détecteurs Time-and-Space-Correlated-Single-Photon-Counting comprend ou comprennent des anodes multiples conductrices ou des anodes multiples résistives.

**10.** Procédé de nanoscopie par imagerie de durée de vie de fluorescence, comprenant les étapes suivantes :

couplage de deux lasers à impulsions courtes synchronisés au moyen de premiers éléments optiques dans une unité de microscopie qui contient un échantillon,
connexion de l'unité de microscopie par le biais de deuxièmes éléments optiques avec une unité de détecteur sensible au temps et à l'emplacement qui comprend un détecteur imageur à champ large Time-and-Space-Correlated-Single-Photon-Counting et un module Quattro-Image pour l'enregistrement simultané de plusieurs images, la lumière d'émission provenant de l'échantillon et de l'unité de microscopie étant d'abord décomposée par un séparateur de faisceaux dichroïque en une composante à grande longueur d'onde et une composante à courte longueur d'onde qui sont ensuite chacune décomposées de nouveau, par deux séparateurs de faisceaux séparant la polarisation, en fraction de polarisation parallèles et perpendiculaires,
réalisation et commande d'une modélisation Point-Spread de deux sources ponctuelles par une unité de contrôle, les deux sources ponctuelles émettant pour différentes couleurs, et leurs points lumineux de différentes couleurs étant projetés sur le détecteur imageur,
synchronisation du laser, de l'unité de microscopie et de l'unité de détecteur par le biais de l'unité de contrôle.

**11.** Procédé de nanoscopie par imagerie de durée de vie de fluorescence, comprenant les étapes suivantes :

couplage de deux lasers à impulsions courtes synchronisés au moyen de premiers éléments optiques dans une unité de microscopie qui contient un échantillon,
connexion de l'unité de microscopie par le biais de deuxièmes éléments optiques avec une unité de détecteur sensible au temps et à l'emplacement qui comprend deux détecteurs imageurs à champ large Time-and-Space-Correlated-Single-Photon-Counting et trois modules séparateurs Dual-Image individuels pour l'enregistrement simultané de plusieurs images, la lumière d'émission provenant de l'échantillon et de l'unité de microscopie étant, dans le premier module séparateur, décomposée par un séparateur de faisceaux dichroïque en une composante à grande longueur d'onde et une composante à courte longueur d'onde et, dans les deux autres modules séparateurs qui portent chacun un des détecteurs, les directions de polarisation étant ensuite séparées
réalisation et commande d'une modélisation Point-Spread de deux sources ponctuelles par une unité de contrôle, les deux sources ponctuelles émettant pour différentes couleurs, et leurs points lumineux de différentes couleurs étant projetés sur le détecteur imageur,
synchronisation du laser, de l'unité de microscopie et de l'unité de détecteur par le biais de l'unité de contrôle.

**12.** Procédé de nanoscopie par imagerie de durée de vie de fluorescence selon la revendication 10 ou 11, **caractérisé en ce que** le procédé comprend l'étape suivante : scanning multipoint pour l'excitation simultanée de plusieurs points de l'échantillon.

**13.** Procédé de nanoscopie par imagerie de durée de vie de fluorescence selon l'une des revendications 10 à 12, **caractérisé en ce que** le procédé comprend l'étape suivante : excitation monophotonique, biphotonique ou multiphotonique de l'échantillon.

**14.** Procédé de nanoscopie par imagerie de durée de vie de fluorescence selon au moins l'une des revendications 10 à 13, **caractérisé en ce que** le procédé comprend l'étape suivante : couplage de lasers picosecondes ou nanosecondes pulsés dans l'unité de microscopie.

**15.** Procédé de nanoscopie par imagerie de durée de vie de fluorescence selon au moins l'une des revendications 10 à 14, **caractérisé en ce que** le procédé comprend l'étape suivante : vérification de la transmission d'énergie de fluorescence par résonance par l'observation simultanée de deux canaux de couleur ou spectres d'émission ou plus.

**16.** Procédé de nanoscopie par imagerie de durée de vie de fluorescence selon l'une des revendications 10 à 15, **caractérisé en ce que** le procédé comprend les étapes suivantes : utilisation de l'heure d'arrivée absolue des photons individuels pour le suivi et de la corrélation FCS et/ou sélection de la longueur d'onde du laser d'excitation pour l'excitation monophotonique ou multiphotonique.

**17.** Procédé de nanoscopie par imagerie de durée de vie de fluorescence selon l'une des revendications 10 à 16, **caractérisé en ce que** le procédé comprend l'étape suivante : réalisation d'une invasivité minimale par des dispositifs multifocus, les dispositifs multifocus convertissant un faisceau laser en un groupement de faisceaux laser parallèles, et/ou de la confocalité en cas d'excitation biphotonique.

18. Procédé de nanoscopie par imagerie de durée de vie de fluorescence selon la revendication 10, **caractérisé en ce que** le procédé comprend l'étape suivante : observation d'une multiplicité de spectres d'émission résolus en temps le long des diagonales de l'image au moyen de la combinaison du détecteur TSCSPC avec un polychromateur d'imagerie.

19. Procédé de nanoscopie par imagerie de durée de vie de fluorescence selon l'une des revendications 10 à 18, **caractérisé en ce que** le procédé comprend l'étape suivante : imagerie d'anisotropie microsecondes et colocalisation par utilisation de colorants avec de longues durées de vie de luminescence.

20. Procédé de nanoscopie par imagerie de durée de vie de fluorescence selon l'une des revendications 10 à 19, **caractérisé en ce que** la SMI-FLIN est réalisée avec une unité de détecteur à large champ ou conjointement avec le scanning multipoints.

**Fig. 1:**

# Fig. 2

**Beispiel einer Anordnung für zeitaufgelöste Anisotropie von Donor und Akzeptor**

**Fig. 3:**

Zu den Objektiven
der Nanoskopeinheit

Gepulster
Laserstrahl

Laserstrahl Multiplexer:
z.B.: 2D Mikrolinsen-Array
mit Optik

xy-Scanspiegel

**Fig. 4:**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0946855 B1
- DE 29701663 U1
- US 6424421 B1
- DE 19830596 A1
- WO 03031951 A1
- DE 10040988 A1
- DE 10144435 A1
- EP 1291627 A1

**In der Beschreibung aufgeführte Nicht-Patentliteratur**

- **NAGORNI, M. ; S. W. HELL.** 4Pi-confocal microscopy provides three-dimensional images of the microtubule network with 100- to 150-nm resolution. *J. Struct. Biol.,* 1998, vol. 123, 236-247
- **KLAR, T. A. ; S. JAKOBS ; M. DYBA ; A. EGNER ; S. W. HELL.** Fluorescence microscopy with diffraction resolution limit broken by stimulated emission. *Proc. Natl. Acad. Sci. USA,* 2000, vol. 97 (15), 8206-8210
- **H. J. KOESTER ; D. BAUR ; R. UHL ; S. W. HELL.** Ca2+ Fluorescence Imaging with Pico- and Femtosecond Two-Photon Excitation. *Signal and Photodamage Biophys J,* Oktober 1999, vol. 77 (4), 2226-2236
- **K. KÖNIG ; H. LIANG ; MW. BERNS ; B. TROMBERG.** Cell damage by near-IR microbeams. *Nature,* 1995, vol. 377, 20-21
- **K. KÖNIG ; T.W. BECKER ; I. RIEMANN ; P. FISCHER ; K.J. HALBHUBER.** Pulse-length dependence of cellular response to intense near-infrared laser pulses in multiphoton microscopes. *Opt. Lett.,* 1999, vol. 24, 113-115
- **U.K. TIRLAPUR ; K. KÖNIG ; C. PEUCKERT ; R. KRIEG ; K.J. HALBHUBER.** Femtosecond near-infrared laser pulses elicit generation of reactive oxygen species in mammalian cells leading to apoptosis-like death. *Experimental Cell Research.,* 2001, vol. 263, 88-97
- **EMILIANI et al.** Low-intensity two-dimensional imaging of fluorescence lifetimes in living cells. *Applied Physics Letters,* vol. 83 (12), 2471-2473